# EUROPÄISCHE PATENTANMELDUNG

(11) **EP 3 395 513 A1**
(43) Veröffentlichungstag der Anmeldung: **31.10.2018**
(21) Anmeldenummer: 18164110.1
(22) Anmeldetag: 27.03.2018
(51) Int. Cl.: B25J 19/00

(54) **KOLLABORATIVES ROBOTERSYSTEM**

(30) Priorität: 25.04.2017 DE 102017108800
(71) Anmelder: Vaillant GmbH, 42859 Remscheid (DE)
(72) Erfinder: Le Duc, Maurice, 44240 La Chapelle sur Erdre (FR)
(74) Vertreter: Hocker, Thomas

(57) **Zusammenfassung**

Die Erfindung betrifft ein kollaboratives Robotersystem, umfassend einen kollaborativen Positionierungsroboter (1) mit einer ersten kinematischen Kette (4, 6.1, 6.2, 6.3, 6.4, 6.5) zur Positionierung einer Lastaufnahme (13), dass neben dem kollaborativen Positionierungsroboter (1) eine Hebevorrichtung (2) angeordnet ist, die Hebevorrichtung (2) über eine Standsäule (12) oder Deckensäule verfügt, welche über eine zweite kinematische Kette (5, 7.1, 7.2, 7.3, 8) mit einer Aufhängung (9) verbunden ist und die Aufhängung (9) über ein mechanische Verbindung (10) mit der Lastaufnahme (13) verbunden ist.

## Beschreibung

Die Erfindung bezieht sich auf einen Roboter zum Bewegen von Gütern.

Hierbei handelt es sich um Bewegungsautomaten, welche in der Regel translatorische und rotierende Bewegungen mit mehreren Achsen vornehmen können. Die Bewegungen sind hierbei programmierbar und sensorgeführt. Die Roboter sind hierbei mit Werkzeugen, Greifern oder anderen Fertigungsmitteln ausrüstbar und können Handhabungs- und/oder Fertigungsaufgaben ausführen. Wichtige Bestandteile dieser Roboter sind Sensoren zur Erfassung der Umwelt und der Achspositionen, die Aktoren zum Agieren innerhalb der erfassten Umgebung, die Robotersteuerung und das mechanische Gestell inklusive der Getriebe. Es gibt Roboter, welche völlig autonom agieren können, als auch solche, welche unmittelbar gesteuert werden. Der kollaborative Roboter agiert vollkommen autonom in einer gemeinsamen Umwelt mit menschlichen Personen - ohne das es weitere Sicherheitseinrichtungen, wie beispielsweise Zäune, Lichtschranken oder ähnliches (zum Schutz von Personen) zum Einsatz kommen. Eine Schutzumgebung wird durch Sensoren und die steuernde Software gewährleistet.

Es wird im Wesentlichen zwischen translatorischen und rotatorischen Achsen unterschieden, wobei translatorische Bewegungen auch über mehrere Drehbewegungen erreicht werden können. Bei einer offenen Kinematik liegen - wie bei einem menschlichen Arm - alle Achsen der kinematischen Kette hintereinander.

Bei der Auswahl eines Roboters kommt es wesentlich auf die Traglast, die Prozessgeschwindigkeit und die Positioniergenauigkeit an.

In der Automatisierungstechnik und Antriebstechnik bezeichnet man Vorrichtungen, welche den Materialfluss von oder zu einer Wirkstelle bewältigen, als Handhabungseinrichtungen oder Handhabungsgeräte (englisch handling device, handling equipment). Pick-and-Place-Anwendungen sind Handhabungseinrichtungen, welche mittels eines Greifers Bauteile aufnehmen und an einem Zielort platzieren.

Kollaborative Roboter mit einer hohen Positioniergenauigkeit, die in einem direkten und unmittelbar geteilten Arbeitsumfeld mit Menschen ohne weitere technische Schutzeinrichtungen eingesetzt werden, sind in der Regel bezüglich der Traglast reduziert. Kollaborative Roboter mit einer hohen Traglast hingegen verfügen zumeist über eine geringe Positioniergenauigkeit.

Kollaborative Roboter sind Industrieroboter, welche in unmittelbarer Nähe mit Menschen gemeinsam arbeiten und im Produktionsprozess nicht durch Schutzeinrichtungen von diesen getrennt sind. Um keine Verletzungen beim Menschen zu verursachen, verfügen sie über Sensoren, so dass die Roboter sich automatisch abschalten, wenn sie Hindernisse berühren. Die Normen ISO 10218, Teil 1 und 2 sowie ISO/TS 15066 definieren die sicherheitstechnischen Anforderungen an die Roboter. In US 5952796 A ist ein derartiger kollaborativer Roboter beschrieben.

Kollaborative Roboter sind bezüglich der Tragkraft limitiert, um Verletzungen der Bediener zu vermeiden.

Der Erfindung liegt die Aufgabe zugrunde, kollaborativer Roboter derart zu ergänzen, dass sie höhere Lasten tragen können, ohne hierdurch die Bediener zu gefährden.

Erfindungsgemäß wird dies mit einer Vorrichtung mit den Merkmalen des unabhängigen Patentanspruchs dadurch gelöst, dass ein kollaborativer Roboter um eine Hebevorrichtung ergänzt wird, wobei die Hebevorrichtung mit dem kollaborativen Roboter synchronisiert ist. Die Ausleger der Hebevorrichtung agieren oberhalb des Bedieners und nehmen den Großteil der Last auf, während der kollaborative Roboter für die Positionierung der Last zuständig ist. Die Position des kollaborativen Roboters ist hierbei die Vorgabe für die Position der Hebevorrichtung.

Positive Ausgestaltungen ergeben sich durch die Merkmale der abhängigen Patentanspruche.

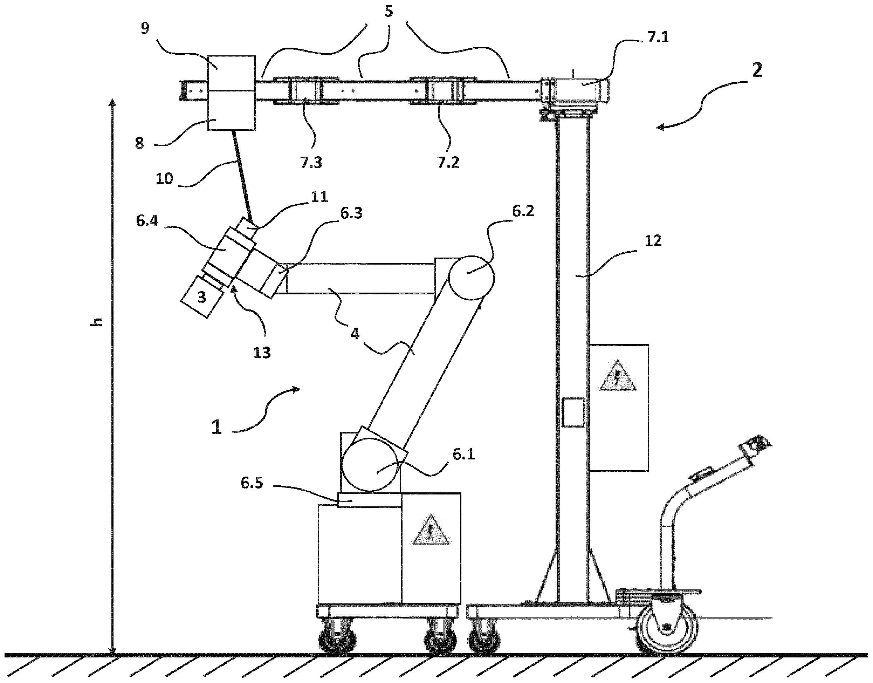

Die Erfindung wird anschließend anhand der Figur erläutert. Hierbei zeigt Figur 1 einen erfindungsgemäßen Roboter.

Figur 1 zeigt einen kollaborativen Positionierungsroboter 1 mit vier Gelenken 6.1, 6.2, 6.3, 6.4, 6.5 und zwei Auslegern sowie einer Last 3 in einer Lastaufnahme 13 am Gelenk 6.4, wodurch sich die Last 3 dreidimensional verschieben sowie in beliebiger Richtung rotieren lässt. Mit der Last 3 ist über die Lastaufnahme 13 eine Lastaufhängung 11 verbunden. Neben dem kollaborativen Positionierungsroboter 1 ist eine Hebevorrichtung 2 angeordnet. Diese Hebevorrichtung 2 verfügt über 3 Hebevorrichtungsausleger 5, welche mit einer Standsäule 12 über Gelenke 7.1, 7.2, 7.3 eine kinematische Kette bilden. Die Hebevorrichtungsausleger 5 bewegen sich parallel zum Boden in einer Höhe h, welche höher ist als Bediener groß sind, vorzugsweise in einer Höhe von 2,2 bis 2,5 m, damit die Bediener nicht an die Hebevorrichtungsausleger 5 stoßen können. Am letzten Hebevorrichtungsausleger 5 ist ein verfahrbarer Schlitten 8 angeordnet. Der Schlitten 8 ist mit einer Aufhängung 9 verbunden; diese Aufhängung 9 ist über eine Verbindung in Form einer Spiralfeder 10 mit der Lastaufhängung 11 verbunden.

In der einfachsten Ausgestaltung der Erfindung verfügt die Hebevorrichtung 2 über keine eigene Antriebstechnik. Wird die Last 3 verschoben, so folgt über die Kraft, welche von der Laustaufhängung 11 über die Spiralfeder 10 auf die Aufhängung 9 übertragen wird der Schlitten 8 horizontal der Last 3. Hierbei werden die Gelenke 7.1, 7.2, 7.3 bewegt.

Eine vorteilhafte Ausgestaltung der Vorrichtung, bei welcher die Hebevorrichtung 2 ein Heberoboter 2 ist, verfügt ferner über nicht dargestellte Sensoren zur Erfassung der Stellung der Gelenke 6.1, 6.2, 6.3, 6.4, 6.5, 7.1, 7.2, 7.3 und der Position des Schlittens 8. Hierbei kann es sich optional auch um die Erfassung der Stellung von Schrittmotoren handeln, woraus sich die Position der Last 3 und der Lastaufhängung 11 errechnen lässt. Zusätzlich oder alternativ können die Aufhängung 9 sowie die Lastaufhängung 11 über Sensorik zur absoluten oder relativen Position zueinander verfügen. Hierdurch lässt sich der Positionsunterschied in beiden horizontalen Richtungen sowie in vertikaler Richtung erfassen. Ferner verfügt die Vorrichtung über eine oder mehrere miteinander verbundene Regelungen. Vorteilhafterweise verfügt die Aufhängung 9 über einen Sensor zur Erfassung der Zugkraft der Verbindung 10, bei welcher es sich auch um ein Stahlseil mit optimalem Seilantrieb handeln kann.

Zum Betrieb des im letzten Abschnitt beschriebenen kollaborativen Positionierungsroboters 1 in Verbindung mit dem Heberoboter 2 werden diese dann definiert positioniert. Zum Abgleich kann der oder den Regelungen die relative Position mitgeteilt werden, so dass bei Bewegungen der beiden Roboter 1, 2 mittels der Messwerte oben beschriebener Sensorik die relative Position jedes Punktes des kollaborativen Positionierungsroboters 1 zu jedem Punkt des Heberoboters 2 berechenbar ist.

Alternativ kann der Schlitten 8 mit der Aufhängung 9 vertikal oberhalb der Lastaufhängung 11 positioniert werden und anschließend die Stellung der Sensorik erfasst werden. Ist die Ausrichtung der beiden Roboter 1, 2 zueinander bekannt, so lässt bei Bewegungen der beiden Roboter 1, 2 mittels der Messwerte oben beschriebener Sensorik die relative Position jedes Punktes des kollaborativen Positionierungsroboters 1 zu jedem Punkt des Heberoboters 2 berechnen. Ist die Ausrichtung der beiden Roboter nicht bekannt, so können an einem anderen Ort der Schlitten 8 mit der Aufhängung 9 vertikal oberhalb der Lastaufhängung 11 positioniert werden; hieraus lässt sich dann die relative Positionierung berechnen. Auch eine Erfassung der Positionen mittels Kameras ist möglich.

Die Aufhängung 9 wird über das Stahlseil 10 mit der Lastaufnahme 11 verbunden und die Zugkraft des Stahlseils 10 erfasst. Der Spindelantrieb der Lastaufhängung 9 wird derart eingestellt, dass das Stahlseil 10 unter Zug steht und die die Zugkraft maximal dem Gewicht der Last 3 entspricht. In der Regel wird die Zugkraft hierbei derart eingestellt, dass der kollaborative Positionierungsroboter 1 maximal den Anteil des Gewichts der Last 3 trägt, welchen er gemäß der relevanten Norm tragen darf.

Zum Transport einer Last 3 kann optional dem kollaborativen Positionierungsroboter 1 ein Bewegungsablauf vorgegeben werden. Alternativ gibt ein Bediener den Bewegungsablauf vor. Bei der Bewegung nehmen die Sensoren und Schrittmotoren des kollaborativen Positionierungsroboters 1 die Bewegungsänderungen auf; die mindestens eine Regelung errechnet daraus Sollwerte für den Heberoboter 2, welcher somit der Bewegung des kollaborativen Positionierungsroboters 1 derart folgt, so dass letztendlich die Aufhängung 9 auf dem Schlitten 8 der Lastaufnahme 11 horizontal folgt. Die Zugkraft des Stahlseils 10 wird dabei durch Bewegung des Spindelantriebs auf oben genannten Sollbereich, idealerweise auf die vorgegebene definierte Spannung eingestellt.

Wird in den Bewegungsablauf des kollaborativen Positionierungsroboters 1 manuell durch den Bediener oder ein Hindernis eingegriffen, so hat dies dementsprechende Auswirkungen auf den Bewegungsablauf des Heberoboters 2. Mittels der Erfassung der Leistungsaufnahme der Motoren des kollaborativen Positionierungsroboters 1 kann die Regelung erkennen, ob der kollaborativen Positionierungsroboter 1 abgebremst oder beschleunigt wird. Bei einer Abbremsung durch den Bediener oder ein Hindernis ist die Leistungsaufnahme je Bewegungsabschnitt größer als im Normalfall. Umgekehrt ist bei einer Leistungsreduzierung je Bewegungsabschnitt davon auszugehen, dass der Bediener mit Körperkraft die Bewegung beschleunigt.

Durch das Folgen des Heberoboters 2 gegenüber dem kollaborativen Positionierungsroboter 1 ergibt sich gegenüber einer parallelen Steuerung beider Roboter 1, 2 der Vorteil, dass die Synchronisation auch bei Verzögerungen und Verzögerungen eines Roboters gewährleistet ist.

### Bezugszeichenliste

1 kollaborativer Positionierungsroboter
2 Hebevorrichtung / Heberoboter
3 Last
4 Ausleger
5 Hebevorrichtungsausleger / Heberoboterausleger
6.1, 6.2, 6.3 Gelenke
7.1, 7.2, 7.3 Gelenke
8 Schlitten
9 Aufhängung
10 Verbindung
11 Lastaufhängung
12 Standsäule

## Patentansprüche

1. Kollaboratives Robotersystem, umfassend einen kollaborativen Positionierungsroboter (1) mit einer ersten kinematischen Kette (4, 6.1, 6.2, 6.3, 6.4, 6.5) zur Positionierung einer Lastaufnahme (13), **dadurch gekennzeichnet, dass** neben dem kollaborativen Positionierungsroboter (1) eine Hebevorrichtung (2) angeordnet ist, die Hebevorrichtung (2) über eine Standsäule (12) oder Deckensäule verfügt, welche über eine zweite kinematische Kette (5, 7.1, 7.2, 7.3, 8) mit einer Aufhängung (9) verbunden ist und die Aufhängung (9) über ein mechanische Verbindung (10) mit der Lastaufnahme (13) verbunden ist.

2. Kollaboratives Robotersystem nach Anspruch 1, **dadurch gekennzeichnet, dass** die erste kinematischen Kette (4, 6.1, 6.2, 6.3, 6.4, 6.5) aus Gelenken (6.1, 6.2, 6.3, 6.4, 6.5), mindestens einem Ausleger (4) und / oder mindestens einem Lastschlitten besteht und die zweite kinematische Kette (5, 7.1, 7.2, 7.3, 8) aus Gelenken (7.1, 7.2, 7.3), mindestens einen Hebevorrichtungsausleger (5) und / oder mindestens einem Schlitten (8) besteht.

3. Kollaboratives Robotersystem nach Anspruch 1 oder 2, **dadurch gekennzeichnet, dass** die mechanische Verbindung (10) eine Feder und / oder ein Seil ist.

4. Kollaboratives Robotersystem nach Anspruch 3, **dadurch gekennzeichnet, dass** wenn die mechanische Verbindung (10) ein Seil umfasst die Aufhängung (9) einen Seilantrieb umfasst.

5. Kollaboratives Robotersystem nach einem der Ansprüche 1 bis 4, **dadurch gekennzeichnet, dass** die Hebevorrichtung (2) ein Heberoboter (2) ist.

6. Kollaboratives Robotersystem nach einem der Ansprüche 1 bis 5, **dadurch gekennzeichnet, dass** Vorrichtungen zur Erfassung und / oder Berechnung der Position der Lastaufnahme (13) oder eines Punktes nahe der Lastaufnahme (13) und Vorrichtungen zur Erfassung und / oder Berechnung der Position des Aufhängung (9) oder eines Punktes nahe der Aufhängung (9) vorhanden sind.

7. Kollaboratives Robotersystem nach Anspruch 6, **dadurch gekennzeichnet, dass** die Vorrichtungen zur Erfassung und / oder Berechnung der Positionen Sensoren zur Erfassung der Stellung der Gelenke (6.1, 6.2, 6.3, 6.4, 6.5, 7.1, 7.2, 7.3) und / oder der Position des Lastschlittens und / oder des Schlittens (8) und / oder Sensoren zur Erfassung der Stellung von Schrittmotoren sind.

8. Kollaboratives Robotersystem nach Anspruch 6 oder 7, **dadurch gekennzeichnet, dass** die Vorrichtungen zur Erfassung und / oder Berechnung der Positionen Sensoren zur Erfassung der absoluten oder relativen Position zueinander sind.

9. Verfahren zum Betrieben eines kollaboratives Robotersystems mit einem kollaborativen Positionierungsroboter (1) mit mindestens einem Gelenk (6.1, 6.2, 6.3, 6.4, 6.5) und mindestens einem Ausleger (4) und einer Lastaufnahme (13) sowie Vorrichtungen zur Erfassung und / oder Berechnung der Position der Lastaufnahme (13) oder eines Punktes nahe der Lastaufnahme (13), in Kombination mit einem Heberoboter (2), wobei der Heberoboter (2) über eine Standsäule (12) oder Deckensäule verfügt, welche über Gelenke (7.1, 7.2, 7.3) und mindestens einen Heberoboterausleger (5) sowie einer Aufhängung (9) eine kinematische Kette bilden, die Aufhängung (9) über ein mechanische Verbindung (10) mit der Lastaufnahme (13) verbunden ist, sowie Vorrichtungen zur Erfassung und / oder Berechnung der Position der Aufhängung (9) oder eines Punktes nahe der Aufhängung (9) **dadurch gekennzeichnet, dass** eine Regelung die Position der Lastaufnahme (13) oder eines Punktes nahe der Lastaufnahme (13) erfasst und den Heberoboter (2) derart steuert, dass die Aufhängung (9) horizontal der Lastaufnahme (13) oder einem Punkt nahe der Lastaufnahme (13) folgt.

10. Verfahren zum Betrieben eines kollaboratives Robotersystems nach Anspruch 9, **dadurch gekennzeichnet, dass** die Aufhängung (9) einen Seilantrieb umfasst und die Regelung den Seilantrieb derart steuert, dass die mechanische Verbindung (10) unter einer definierten Spannung steht.
